# EUROPÄISCHE PATENTSCHRIFT

(11) **EP 0 412 397 B1**
(45) Veröffentlichungstag und Bekanntmachung des Hinweises auf die Patenterteilung: **25.03.1998**
(21) Anmeldenummer: 90114610.0
(22) Anmeldetag: 30.07.1990
(51) Int. Cl.: C23C 30/00, C22C 19/00

(54) **Rheniumhaltige Schutzbeschichtung mit grosser Korrosions- und/oder Oxidationsbeständigkeit**
Rhenium-containing protective coating with high corrosion and oxidation resistance
Revêtement protecteur contenant du rhénium possédant une résistance plus grande à la corrosion et l'oxydation

(30) Priorität: 10.08.1989 DE 3926479
(43) Veröffentlichungstag der Anmeldung: 13.02.1991
(73) Patentinhaber: SIEMENS AKTIENGESELLSCHAFT, 80333 München (DE)
(72) Erfinder: Czech, Norbert, Dr., F-4300 Essen (DE); Schmitz, Friedhelm, D-4220 Dinslaken (DE)

(56) Entgegenhaltungen:
- DE-A- 1 758 010
- DE-A- 2 526 683
- FR-A- 2 463 192
- US-A- 4 451 299

## Beschreibung

Die vorliegende Erfindung betrifft eine Schutzbeschichtung für metallische Bauteile, insbesondere Gasturbinenbauteile aus Superlegierungen auf Nickel- oder Kobalt-Basis. Schutzbeschichtungen für metallische Bauteile, die deren Korrosionsbeständigkeit und/oder Oxidationsbeständigkeit erhöhen sollen, sind nach dem Stand der Technik in großer Zahl bekannt. Die meisten dieser Beschichtungen sind unter dem Sammelnamen MCrAlY bekannt, wobei M für mindestens eines der Elemente aus Eisen, Nickel, Kobalt steht und weitere wesentliche Bestandteile Chrom, Aluminium und Yttrium oder ein dem Yttrium äquivalentes Element aus der Gruppe der seltenen Erden sind. Typische Beschichtungen dieser Art sind beispielsweise aus der US-PS 4,005,989 bekannt. Aus der US-PS 4,034,142 ist weiter bekannt, daß ein zusätzlicher Anteil an Silizium die Eigenschaften solcher Schutzbeschichtungen weiter verbessern kann. Aus der EP-A 0 194 392 sind weiterhin zahlreiche spezielle Zusammensetzungen für Schutzbeschichtungen des obigen Typs mit Beimischungen weiterer Elemente für verschiedene Anwendungszwecke bekannt. Dabei ist auch das Element Rhenium mit Beimischungen bis 10 % (Gewichtsprozent) neben vielen anderen Wahlkomponenten erwähnt. Wegen des durchgängig geringen Chromgehaltes aller in diesem Dokument angegebenen Schichten von unter 20 % und den ansonsten wenig spezifizierten weiten Bereichen der möglichen Beimischungen ist jedoch keine der angegebenen Beschichtungen für besondere Bedingungen qualifiziert, die z. B. bei stationären Gasturbinen mit hoher Eintrittstemperatur auftreten, wenn diese außer im Vollastbetrieb auch im Teillastbetrieb über längere Zeiträume betrieben werden, oder bei verwandten Verwendungen, z. B. in Flugtriebwerken.

Aus dem US-Patent 4 451 299 geht eine Schutzbeschichtung des Typs MCrAlY hervor mit folgender Zusammensetzung:
15 bis 45 % Chrom
7 bis 20 % Aluminium
0,1 bis 5 % Yttrium
0 bis 10 % zumindest eines der Metalle Platin, Rhenium, Silizium, Tantal und Mangan,
wobei M zumindest eines der Metalle Eisen, Kobalt und Nickel ist. Das Patent bezieht sich insbesondere auf die Verbesserung der Oxidationsbeständigkeit von Schutzbeschichtungen durch oberflächliches Aufschmelzen.

Ausgehend von diesem Stand der Technik ist es Aufgabe der vorliegenden Erfindung, eine Schutzbeschichtung zu schaffen, die eine hohe Korrosionsfestigkeit sowohl bei mittleren Temperaturen wie auch bei hohen Temperaturen aufweist. Die Korrosions- und Oxidationseigenschaften sollen im Temperaturbereich von 600 bis 1150° C so verbessert werden, daß insbesondere solche Schutzbeschichtungen bei stationären Gasturbinenanlagen mit Eintrittstemperaturen von beispielsweise oberhalb 1200° C, die im Teillast- oder Vollastbereich arbeiten, eingesetzt werden können. Auch die Korrosionsfestigkeit und Oxidationsbeständigkeit von Beschichtungen für andere Anwendungsfälle soll erhöht werden.

Die Lösung dieser Aufgabe wird durch eine Schutzbeschichtung erreicht, die folgende Bestandteile enthält (in Gewichtsprozent):
1 - 20 % Rhenium,
22 - 50 % Chrom,
0 - 15 % Aluminium, wobei der Anteil von Chrom und Aluminium zusammen mindestens 25 % und höchstens 53 % ist,
0,3 - 2 % insgesamt mindestens eines reaktiven Elementes aus der Gruppe der seltenen Erden, insbesondere Yttrium,
0 - 3 % Silizium,
Rest mindestens eines der Elemente aus Eisen, Nickel, Kobalt, vorzugsweise nur Nickel und/oder Kobalt. Die Schutzbeschichtung kann natürlich die üblichen erschmelzungsbedingten Verunreinigungen und die für Legierungen dieser Art üblichen Beimischungen enthalten. Weiterhin ist aus der Literatur bekannt, daß bestimmte Wahlkomponenten eine Schutzbeschichtung nicht beeinflussen oder unter verschiedenen Gesichtspunkten ihre Herstellung oder ihre Eigenschaften sogar verbessern. Die vorliegende Erfindung soll auch Schutzbeschichtungen mit einem Gesamtanteil der Wahlkomponenten von max. 15 %, insbesondere im Bereich von wenigen Prozent, umfassen. Typische aus der Literatur bekannte Wahlkomponenten für Schutzbeschichtungen und ihre Anteile sind:
0 - 5 % Hafnium,
0 - 12 % Wolfram,
0 - 10 % Mangan,
0 - 15 % Tantal,
0 - 5 % Titan,
0 - 4 % Niob,
0 - 2 % Zirkon.

Die vorliegende Erfindung nutzt aus, daß Rhenium als Beimischung bei Schutzbeschichtungen deren Lebensdauer unter korrosiven oder oxidierenden Einflüssen erheblich verbessern kann, wobei seine Wirkung trotz des geringeren Preises den positiven Wirkungen von Platin und anderen Platinmetallen ähnelt. Die Zugabe von Rhenium kann daher für unterschiedliche Zwecke optimierte Schichten weiter verbessern.

Als für Anwendungen z. B. bei stationären Gasturbinen günstige Bereiche haben sich 1 - 15 % Rhenium, vorzugsweise 4 - 10 %, insbesondere etwa 7 % erwiesen. Für diese Anwendung ist im Hinblick auf die Duktilität ein Aluminiumgehalt von 7 - 9 %, vorzugsweise etwa 8 % geeignet. Um bei mittleren Temperaturen bis etwa 900° C eine gute Korrosionsbeständigkeit zu erreichen, sollte ein Anteil an Chrom von 28 - 32 % vorgesehen werden. Hierbei unterstützt ein Anteil von 1 - 2 % Silizium die Wirkung von Chrom und Aluminium und begünstigt die Haftung einer sich wegen des Aluminiumanteils ausbildenden schützenden Aluminiumoxydschicht. Ein Anteil von 25 - 35 % Nickel verbessert die Duktilität und verringert gleichzeitig die Interdiffusion gegenüber dem Grundwerkstoff des beschichteten Bauteiles, sofern es sich um einen Nickel-Basis-Grundwerkstoff oder eine Superlegierung mit hohem Nickelanteil handelt. Der Restanteil Kobalt bewirkt gute Korrosionseigenschaften bei hohen Temperaturen, die durch den Rheniumanteil weiter verbessert werden.

Für stationäre Gasturbinen mit hoher Eintrittstemperatur oberhalb von beispielsweise 1200° C ist daher folgende Zusammensetzung qualifiziert:
1 - 15 % Rhenium, vorzugsweise 4 - 10 %,
25 - 35 % Nickel, vorzugsweise etwa 30 %,
28 - 32 % Chrom, vorzugsweise etwa 30 %,
7 - 9 % Aluminium, vorzugsweise etwa 8 %,
1 - 3 % Silizium, vorzugsweise etwa 1,5 %,
0,3 - 2 % Yttrium, vorzugsweise etwa 0,6 %,

Rest Kobalt, erschmelzungsbedingte Verunreinigungen und Wahlkomponenten wie oben erwähnt. Ein bevorzugter Anwendungsbereich für diese Schutzbeschichtungen sind die vorderen Schaufeln und Bauteile im Eintrittsbereich einer stationären Gasturbine mit bei Vollast hoher Eintrittstemperatur, die zeitweise auch im Teillastbereich betrieben werden soll.

Für andere Anwendungen, z. B. Flugtriebwerke kann ein Rhenium-Anteil ebenfalls die Lebensdauer dort benutzter Schichten erhöhen. Hierfür ist folgende Zusammensetzung als Beispiel anzugeben:
1 - 15 % Rhenium, vorzugsweise 4 - 10 %,
22 - 26 % Chrom,
9 - 15 % Aluminium, vorzugsweise 10 - 13 %,
0,3 - 2 % insgesamt mindestens eines reaktiven Elementes aus der Gruppe der seltenen Erden, insbesondere Yttrium,
0 - 30 % Kobalt, vorzugsweise 0 - 15 %,
0 - 3 % Silizium, vorzugsweise 1 - 2 %,

Rest hauptsächlich Nickel, sowie Verunreinigungen und Wahlkomponenten wie oben erwähnt.

Auch bei Schichten, die besonders gegen Korrosion bei etwa 600 bis 850 °C (sogenannte HTK II) ausgelegt sind, bringt eine erfindungsgemäße Beimischung von Rhenium Vorteile, z. B. in folgender Zusammensetzung:
1 - 15 % Rhenium, vorzugsweise 4 - 10 %,
25 - 50 % Chrom, vorzugsweise 35 - 45 %,
0 - 3 % Aluminium, vorzugsweise 0 - 1 %,
0,3 - 2 % Yttrium, vorzugsweise 0,6 %
0,3 - 3 % Silizium, vorzugsweise 1 - 2 %,

Rest hauptsächlich mindestens eines der Elemente aus Eisen, Kobalt, Nickel, sowie Verunreinigungen und Wahlkomponenten wie oben erwähnt.

Die vorliegende Erfindung beschränkt sich nicht auf die angegebenen Beispiele, sondern umfaßt generell die Verbesserung von gegen Korrosion und Oxidation unter verschiedenen Bedingungen spezifizierten Schichten durch Zugabe kleiner oder größerer Anteile an Rhenium.

## Patentansprüche

1. Schutzbeschichtung für metallische Bauteile, insbesondere Gasturbinenbauteile aus Superlegierungen auf Nickel- oder Kobalt-Basis, enthaltend folgende Bestandteile (in Gewichtsprozent):
1 - 20 % Rhenium,
22 - 50 % Chrom,
0 - 15 % Aluminium, wobei der Anteil von Chrom und Aluminium zusammen mindestens 25 % und höchstens 53 % ist,
0,3 - 2 % insgesamt mindestens eines reaktiven Elementes aus der Gruppe der seltenen Erden, insbesondere Yttrium,
0 - 3 % Silizium,
Rest hauptsächlich mindestens eines der Elemente aus Eisen, Nickel, Kobalt und Verunreinigungen, sowie folgende Wahlkomponenten:
0 - 5 % Hafnium,
0 - 12 % Wolfram,
0 - 10 % Mangan,
0 - 5 % Tantal,
0 - 5 % Titan,
0 - 4 % Niob,
0 - 2 % Zirkon,
wobei der Gesamtanteil der Wahlkomponenten 0 bis maximal 15 % beträgt, vorzugsweise 0 - 8 %.

2. Schutzbeschichtung nach Anspruch 1, wobei der Rheniumanteil 1 bis 15 % ist.

3. Schutzbeschichtung nach Anspruch 2, wobei der Rheniumanteil 4 bis 10 % ist.

4. Schutzbeschichtung nach Anspruch 3, wobei der Rheniumanteil etwa 7 % ist.

5. Schutzbeschichtung nach Anspruch 1, 2, 3 oder 4, wobei der Aluminiumanteil 7 bis 9 % , vorzugsweise etwa 8 % ist.

6. Schutzbeschichtung nach einem der vorhergehenden Ansprüche, wobei der Siliziumanteil 1 bis 2 % ist.

7. Schutzbeschichtung nach einem der vorhergehenden Ansprüche, wobei der Chromanteil 28 bis 32 % ist.

8. Schutzbeschichtung nach einem der vorhergehenden Ansprüche, wobei der Nickelanteil 25 bis 35 % ist.

9. Schutzbeschichtung nach einem der vorhergehenden Ansprüche, wobei der Kobaltanteil 25 bis 35 % ist.

10. Schutzbeschichtung nach Anspruch 1, enthaltend:
5 - 15 % Rhenium, vorzugsweise 4 - 10 %,
25 - 35 % Nickel, vorzugsweise etwa 30 %,
28 - 32 % Chrom, vorzugsweise etwa 30 %,
7 - 9 % Aluminium, vorzugsweise etwa 8 %,
1 - 3 % Silizium, vorzugsweise etwa 1,5 %,
0,3 - 2 % Yttrium, vorzugsweise etwa 0,6 %,
Rest hauptsächlich Kobalt und Verunreinigungen.

11. Schutzbeschichtung nach Anspruch 1, enthaltend:
1 - 15 % Rhenium, vorzugsweise 4 - 10 %,
22 - 26 % Chrom,
9 - 15 % Aluminium, vorzugsweise 10 - 13 %,
insgesamt 0,3 - 2 % mindestens eines reaktiven Elementes aus der Gruppe der seltenen Erden, insbesondere Yttrium,
0 - 30 % Kobalt, vorzugsweise 0 - 15 %,
0 - 3 % Silizium, vorzugsweise 1 - 2 %
Rest hauptsächlich Nickel und Verunreinigungen.

12. Schutzbeschichtung nach Anspruch 1, enthaltend:
1 - 15 % Rhenium, vorzugsweise 4 - 10 %,
25 - 50 % Chrom, vorzugsweise 35 - 45 %,
0 - 3 % Aluminium, vorzugsweise 0 - 1 %,
0,3 - 2 % Yttrium, vorzugsweise etwa 0,6 %,
0 - 3 % Silizium, vorzugsweise 1 - 2 %,
Rest hauptsächlich mindestens eines der Elemente aus Eisen, Kobalt, Nickel und Verunreinigungen.

## Claims

1. Protective coating for metallic components, in particular gas turbine components consisting of nickel-based or cobalt-based high temperature alloys, containing the following constituents (in % by weight):
1 - 20 % rhenium,
22 - 50 % chromium,
0 - 15 % aluminium, whereby the share of chromium and aluminium together is at least 25 % and at most 53 %,
0.3 - 2 % in total of at least one reactive element from the group of rare earths, in particular yttrium,
0 - 3 % silicon,
the remainder being mainly at least one of the elements iron, nickel, cobalt and impurities, and the following optional components:
0 - 5 % hafnium,
0 - 12 % tungsten,
0 - 10 % manganese,
0 - 5 % tantalum,
0 - 5 % titanium,
0 - 4 % niobium,
0 - 2 % zirconium,
whereby the total share of the optional components amounts to O to a maximum of 15 %, preferably 0 - 8 %.

2. Protective coating according to claim 1, whereby the rhenium share is 1 to 15 %.

3. Protective coating according to claim 2, whereby the rhenium share is 4 to 10 %.

4. Protective coating according to claim 3, whereby the rhenium share is about 7 %.

5. Protective coating according to claim 1, 2, 3 or 4, whereby the aluminium share is 7 to 9 %, preferably about 8 %.

6. Protective coating according to one of the preceding claims, whereby the silicon share is 1 to 2 %.

7. Protective coating according to one of the preceding claims, whereby the chromium share is 28 to 32 %.

8. Protective coating according to one of the preceding claims, whereby the nickel share is 25 to 35 %.

9. Protective coating according to one of the preceding claims, whereby the cobalt share is 25 to 35 %.

10. Protective coating according to claim 1, containing:
5 - 15 % rhenium, preferably 4 - 10 %,
25 - 35 % nickel, preferably about 30 %,
28 - 32 % chromium, preferably about 30 %,
7 - 9 % aluminium, preferably about 8 %,
1 - 3 % silicon, preferably about 1.5 %,
0.3 - 2 % yttrium, preferably about 0.6 %,
the remainder being mainly cobalt and impurities.

11. Protective coating according to claim 1, containing:
1 - 15 % rhenium, preferably 4 - 10 %,
22 - 26 % chromium,
9 - 15 % aluminium, preferably 10 - 13 %,
0.3 - 2 % in total of at least one reactive element from the group of rare earths, in particular yttrium,
0 - 30 % cobalt, preferably 0 - 15 %,
0 - 3 % silicon, preferably 1 - 2 %,
the remainder being mainly nickel and impurities.

12. Protective coating according to claim 1, containing:
1 - 15 % rhenium, preferably 4 - 10 %,
25 - 50 % chromium, preferably 35 - 45 %,
0 - 3 % aluminium, preferably 0 - 1 %,
0.3 - 2 % yttrium, preferably 0.6 %,
0 - 3 % silicon, preferably 1 - 2 %,
the remainder being mainly at least one of the elements iron, cobalt, nickel and impurities.

## Revendications

1. Revêtement de protection de pièces métalliques, notamment de pièces de turbine à gaz en superalliages à base de nickel ou à base de cobalt, renfermant les constituants suivants (en pourcentage en poids) :
de 1 à 20 % de rhénium,
de 22 à 50 % de chrome,
de 0 à 15 % d'aluminium, la proportion de l'ensemble du chrome et de l'aluminium étant d'au moins 25% et d'au plus de 53%,
de 0,3 à 2% en tout d'au moins un élément réactif choisi dans le groupe des terres rares, notamment de l'yttrium,
de 0 à 3% de silicium,
Le reste étant principalement au moins un des éléments que sont le fer, le nickel, le cobalt et des impuretés, ainsi que les constituants éventuels suivants :
de 0 à 5% d'hafnium,
de 0 à 12% de tungstène,
de 0 à 10% de manganèse,
de 0 à 5% de tantale,
de 0 à 5% de titane,
de 0 à 4% de niobium
de 0 à 2% de zirconium,
la proportion totale des constituants éventuels étant comprise entre 0 et 15% au maximum et de préférence entre 0 et 8%.

2. Revêtement de protection suivant la revendication 1, dans lequel la proportion de rhénium est comprise entre 1 et 15%.

3. Revêtement de protection suivant la revendication 2, dans lequel la proportion de rhénium est comprise entre 4 et 10 %.

4. Revêtement de protection suivant la revendication 3, dans lequel la proportion de rhénium est de 7% environ.

5. Revêtement de protection suivant la revendication 1, 2, 3 ou 4, dans lequel la proportion d'aluminium est comprise entre 7 et 9% et, de préférence. de 8% environ.

6. Revêtement de protection suivant l'une des revendications précédentes, dans lequel la proportion de silicium est comprise entre 1 et 2%.

7. Revêtement de protection suivant l'une des revendications précédentes, dans lequel la proportion de chrome est comprise entre 28 et 32%.

8. Revêtement de protection suivant l'une des revendications précédentes, dans lequel la proportion de nickel est comprise entre 25 et 35%.

9. Revêtement de protection suivant l'une des revendications précédentes, dans lequel la proportion de cobalt est comprise entre 25 et 35%.

10. Revêtement de protection suivant la revendication 1, renfermant :
de 5 à 15 % de rhénium, de préférence, de 4 à 10 %,
de 25 à 35 % de nickel, de préférence, environ 30 %,
de 28 à 32 % de chrome, de préférence, environ 30 %,
de 7 à 9 % d'aluminium, de préférence, environ 8 %,
de 1 à 3 % de silicium, de préférence, environ 1,5 %,
de 0,3 à 2 % d'yttrium, de préférence, environ 0,6 %,
le reste étant principalement du cobalt et des impuretés.

11. Revêtement suivant la revendication 1, renfermant ;
de 1 à 15 % de rhénium, de préférence, de 4 à 10 %,
de 22 à 26 % de chrome,
de 9 à 15 % d'aluminium, de préférence, de 10 à 13 %,
en tout de 0,3 à 2 % au moins d'un élément réactif choisi dans le groupe des terres rares, notamment de l'yttrium,
de 0 à 30 % de cobalt, de préférence, de 0 à 15 %,
de 0 à 3 % de silicium, de préférence, de 1 à 2 %
le reste étant principalement du nickel et des impuretés.

12. Revêtement suivant la revendication 1, renfermant :
de 1 à 15 % de rhénium, de préférence, de 4 à 10 %,
de 25 à 50 % de chrome, de préférence, de 35 à 45 %,
de 0 à 3 % d'aluminium, de préférence, de 0 à 1 %,
de 0,3 à 2 % d'yttrium, de préférence, environ 0,6 %,
de 0 à 3 % de silicium, de préférence, de 1 à 2 %,
le reste étant principalement au moins l'un des éléments que sont le fer, le cobalt, le nickel et des impuretés.
